# EUROPÄISCHE PATENTSCHRIFT

(11) **EP 2 706 865 B1**
(45) Veröffentlichungstag und Bekanntmachung des Hinweises auf die Patenterteilung: **27.02.2019**
(21) Anmeldenummer: 12727605.3
(22) Anmeldetag: 11.05.2012
(51) Int. Cl.: A23G 1/04, A23G 1/20, A23G 3/02, A23G 9/28, A23G 3/00, A23G 1/00

(54) **POSITIONIERBARE DÜSEN**
POSITIONABLE NOZZLES
BUSES POSITIONNABLES

(30) Priorität: 11.05.2011 EP 11165653
(43) Veröffentlichungstag der Anmeldung: 19.03.2014
(73) Patentinhaber: Bühler AG, 9240 Uzwil (CH)
(72) Erfinder: BRAUN, Peter, CH-8280 Kreuzlingen (CH); BÜHLER, Leo, CH-8820 Wädenswil (CH); BAUER, Bernhard, CH-9242 Oberuzwil (CH); BALLARDI, Stefano, CH-9223 Schweizersholz (CH)
(74) Vertreter: Hepp Wenger Ryffel AG
(86) Internationale Anmeldenummer: PCT/EP2012/058811
(87) Internationale Veröffentlichungsnummer: WO 2012/152932

(56) Entgegenhaltungen:
- DE-A1-102005 004 785
- DE-A1-102008 001 371
- US-A- 2 742 000
- US-A- 4 889 210
- US-A- 5 271 572
- US-A1- 2007 267 087
- US-A1- 2010 133 360

## Beschreibung

Die Erfindung betrifft eine Vorrichtung und ein Verfahren zur Verarbeitung eines Verzehrgutes in Form einer viskosen bis pastösen Masse, insbesondere eines Verzehrgutes auf Fettmasse-Basis wie Schokolade oder eines Verzehrgutes auf Wasser-Basis wie Eiskrem.

Abgabedüsen, die gegenüber einer Unterlage verschoben werden können, sind aus dem Stand der Technik bekannt.

So zeigt z.B. die US 3,921,858 eine stiftartige Tube, die über eine flexible Massenleitung aus einem Massebehälter mit Dekoriermasse versorgt wird, und die zum Dekorieren per Hand über ein Bäckereiprodukt geführt werden kann.

Eine automatische Bewegung einer Düse ist beispielsweise in US 2,742,000 offenbart. Hier werden eine Abgabedüse und ein Massebehälter mit Linearführungen über ein bewegtes Transportband geführt. Mit dieser Vorrichtung sind Riegel, Ringe und Brezel formbar.

Lineare Führungen, um eine Düse in x-, y- und z-Richtung zu bewegen, sind auch aus den Druckschriften EP 0 321 188 und DE 10 2005 004 785 bekannt.

Die Druckschrift US 4889210 zeigt einen Servierroboter, der einen Arm aufweist, mit welchem ein abgegebenes Produkt von einem Ort, beispielsweise einem Produktabgabeort, zu einem anderen Ort, zum Beispiel zum Kunden, befördert wird.

Die Druckschrift US 5271572 offenbart eine Vorrichtung zur Auswahl und zum Pressen von Früchten, sowie zum Herstellen eines Desserts. Die Vorrichtung umfasst Abteile, die karusselartig um eine gemeinsame Achse bewegbar sind und in denen sich unterschiedliche Früchte befinden. Ein bestimmtes Abteil kann an einen Ausgabeort bewegt werden, wo die Früchte von einer Endlosschraube aus dem Abteil herausgetrieben und dabei zerquetscht werden.

Die bekannten Vorrichtungen sind entweder eher langsam oder unpräzise, was den Dosierort und die Dosiermenge angeht. Sie können in der Regel ohne aufwändige Umrüstung nur für einen Zweck, insbesondere für die Herstellung eines bestimmten Verzehrguts, verwendet werden.

Es ist daher die Aufgabe der vorliegenden Erfindung, die Nachteile des Bekannten zu überwinden und eine Vorrichtung und ein Verfahren bereitzustellen, welche ein hochflexibles und ein hochpräzises dosiertes Abgeben von Masse zur Herstellung eines Verzehrguts ermöglichen.
Die Aufgabe wird gelöst durch eine Vorrichtung zur Verarbeitung eines Verzehrgutes in Form einer viskosen bis pastösen Masse, insbesondere eines Verzehrgutes auf Fettmassebasis, wie Schokolade oder eines Verzehrgutes auf Wasserbasis, wie Eiscreme mit mindestens einer Dosiereinheit zum dosierten Abgeben eines bestimmten Volumens der Masse, wie sie in Anspruch 1 definiert ist. Die mindestens eine Dosiereinheit weist mindestens eine Kammer mit mindestens einer verschliessbaren Auslassöffnung für die zu dosierende Masse sowie ein Druckerzeugungsmittel auf.
Der Druck kann beispielsweise über einen Gasdruck erzeugt werden, der in einem mit der Dosierkammer über eine Fluidverbindung verbundenen Massebehälter oder direkt in der der Dosierkammer errichtet wird.
Bevorzugt weist die Dosiereinheit einen in die Kammer hineinragenden und innerhalb der Kammer beweglichen Verdrängungskörper auf, der zwischen einer ersten und einer zweiten Stellung beweglich ist.
In der ersten Stellung ist die Auslassöffnung geschlossen und eine Einlassöffnung offen und das zwischen dem Verdrängungskörper und der Kammer definierte Hohlraumvolumen hat seinen grössten Wert.

In der zweiten Stellung ist die Auslassöffnung offen und die Einlassöffnung bevorzugt geschlossen und das zwischen dem Verdrängungskörper und der Kammer definierte Hohlraumvolumen hat seinen kleinsten Wert.

Durch den beweglichen Verdrängungskörper kann auf die Masse ein Druck ausgeübt werden, der die Masse durch die Auslassöffnung hinaustreibt. Insbesondere ist die mindestens eine Auslassöffnung durch ein Auslassventil verschliessbar. Insbesondere ist die Einlassöffnung ebenfalls über ein Ventil verschliessbar.

Erfindungsgemäss umfasst die Vorrichtung eine Antriebseinheit, mittels derer die Dosiereinheit dreh- und/oder schwenkbar ist.

Bei der erfindunsgemässen Vorrichtung wird die gesamte Dosiereinheit bewegt. Dies ermöglicht ein präzises Dosieren des Verzehrgutes, insbesondere eine präzise Abmessung des abgegebenen Volumens.

Durch die Dreh- bzw. Schwenkbewegung kann die Dosiereinheit sehr schnell am beabsichtigten Ort sein. Auf Wunsch können sehr schnell ein gewünschter Abgabeort und eine gewünschte Abgabemenge, gegebenenfalls eine gewünschte Art des Verzehrgutes, miteinander in Bezug gebracht werden, und somit eine präzise dosierte Menge einer bestimmten Masse an einem bestimmten Ort abgegeben werden.

Bevorzugt umfasst die Vorrichtung eine Antriebseinheit, mittels derer die Dosiereinheit zusätzlich translatorisch bewegbar ist.

Durch eine zusätzliche translatorische Bewegung können auch grössere Distanzen schnell zurückgelegt werden.

Bei dem Antrieb handelt es sich bevorzugt um einen Roboterarm, eine Mehrarmroboter oder um eine kombinierte Linear-/Drehführung.

Dabei verfügt die mindestens eine Dosiereinheit über eine Temperiervorrichtung, insbesondere über Kanäle für ein Kühlmittel oder ein elektrisches Kühlelement.
Die Temperiervorrichtung wird mit der Dosiereinheit zusammen bewegt, d.h. die Temperierung erfolgt vor Ort.
Durch die Temperierung kann die Masse, die sich in der Dosierkammer befindet, auf eine optimale Temperatur gebracht werden oder bei einer optimalen Temperatur gehalten werden.
Die Dosierkammer der Dosiereinheit kann bereits mit Verzehrmasse gefüllt sein, die dort für eine Dosierung bereit steht, sobald dies erforderlich ist. Im Moment der angeforderten Mengenabgabe, erspart dies Zeit, die nötig wäre, um Verzehrgut beispielsweise aus einem entfernten temperierten Massebehälter zur Dosiereinheit zu fördern.
Die Masse im Dosierkammervolumen ist also bereit zur Abgabe, unabhängig davon, wann die Abgabe stattfinden soll.
Gleichzeitig wird die Qualität des Verzehrguts durch die Möglichkeit der Temperierung bis zum Zeitpunkt der tatsächlichen Abgabe aus der Dosiereinheit gewährleistet.
Der Druck kann über einen Dreh-Hubkolben erzeugt werden.
In einer vorteilhaften Ausführung der Erfindung ist die mindestens eine Dosiereinheit eine Dosierkammer mit veränderbarem Kammervolumen und mit mindestens einem Dosierkammer-Auslassventil sowie einem Dosierkammer-Einlassventil, wobei mit dem Dosierkammer-Einlassventil eine Fluidverbindung zwischen dem Massebehältervolumen und dem Dosierkammervolumen herstellbar ist und das Kammervolumen durch eine axiale Relativbewegung von zwei ineinander geführten Dosierrohren veränderbar ist.

Das Dosierkammer-Auslassventil ist dabei am äusseren Dosierrohr angebracht, das Dosierkammer-Einlassventil am inneren Dosierrohr. Die Ventile sind dabei derart gestaltet, dass das Einlassventil öffnet, wenn das innere Dosierrohr aus dem äusseren Dosierrohr herausgezogen wird, so dass Masse in das Kammervolumen strömen kann. Wird das innere Dosierrohr in das äussere Dosierrohr hineingeführt, so schliesst das Einlassventil und die Ventilfläche drückt die Masse durch das Auslassventil aus dem Kammervolumen heraus, wobei das Auslassventil unter dem Druck der Masse öffnet.

Bei den Ventilen handelt es sich beispielsweise um Klappenventile mit Einzelklappen handeln, wobei die Einzelklappen im montierten Zustand bei geschlossenem Ventil benachbarte Ventilklappen über- oder unterlappen.

Die Relativbewegung zwischen den ineinander geführten Dosierrohren kann kollektiv und/oder getaktet erfolgen.

Bevorzugt ist die Dosiereinheit mit einem Antrieb zur Veränderung des Kammervolumens ausgestattet. Die Dosiereinheit ist dafür bevorzugt individuell ansteuerbar.

Durch einen der Dosiereinheit individuell zugeordneten Antrieb zur Veränderung des Kammervolumens kann die Dosiermenge individuell und präzise eingestellt werden. Dies trägt zur präzisen Dosierung der Masse bei.

Die erfindungsgemässe Vorrichtung ist vorteilhafterweise so gestaltet, dass die Dosiereinheit über eine flexible Masseleitung mit einem, insbesondere stationär angeordneten, Massebehälter verbindbar ist.

Die Masseleitung ist bevorzugt temperierbar.

In der Masseleitung ist ausserdem bevorzugt eine Dosierschnecke angeordnet.

Die Masseleitung kann Teil eines Leitungssystems sein, über welches wahlweise Masse aus verschiedenen Massebehältern und/oder zu verschiedenen Dosiereinheiten geführt wird.

Die Dosiereinheit wird also aus einem Massebehälter gespeist, der nicht mit der Dosiereinheit bewegbar sein muss. In dem Massebehälter kann eine grosse Menge von Verzehrgutmasse gespeichert werden, welches nicht mit der Dosiereinheit bewegt werden braucht, was eine Gewichtsersparnis bedeutet.

Alternativ oder zusätzlich kann die Vorrichtung mindestens einen Massebehälter aufweisen, der zusammen mit der Dosiereinheit räumlich bewegbar ist. Über kleinere mitbewegte Massebehälter kann durch einen Austausch der Behälter und/oder durch eine Nachfüllung mit einer anderen Masse die zu dosierenden Masse schnell gewechselt werden.

Die Vorrichtung ist somit flexibel im Hinblick auf die Sorte der zu dosierenden Masse.

Insbesondere können nebeneinander angeordnete Dosiereinheiten mit unterschiedlichen Verzehrgütern versorgt werden. Die Massebehälter sind bevorzugt ebenfalls temperiert.
Die bewegten Massebehälter sind insbesondere in der Art einer Kartusche werkzeuglos austauschbar und/oder nachfüllbar. Die einzelne Dosiereinheit kann also auf Wunsch auch mit einer anderen Kartusche, d.h. mit einer Kartusche mit anderer Füllung ausgestattet werden. Auch dies erhöht die Flexibilität der Vorrichtung.
Vorteilhafterweise ist die Vorrichtung mit einer frei wählbaren Anzahl von Dosiereinheiten bestückbar.
Eine Antriebseinheit bewegt somit eine oder mehrere Dosiereinheiten, wobei der Benutzer entscheiden kann, wie viele Dosiereinheiten über den jeweiligen Antrieb bewegt werden. Die Dosiereinheiten sind dazu bevorzugt mit Verbindungselementen ausgestattet.
Die Vorrichtung kann auch so ausgelegt sein, dass an die Antriebseinheit ein auswechselbarer Dosierkopf angekoppelt wird, der eine oder mehr Dosiereinheiten umfasst. Durch die Drehung oder den Schwenk des Dosierkopfes kann einem bestimmten Abgabeort eine bestimmte Dosiereinheit zugeordnet werden. Dies kann sehr schnell geschehen.
Die Aufgabe wird ausserdem gelöst durch ein Verfahren zum Verarbeiten eines Verzehrguts in Form einer viskosen bis pastösen Masse, insbesondere eines Verzehrgutes auf Fettmassebasis wie Schokolade oder eines Verzehrgutes auf Wasserbasis wie Eiscreme, mit einer Vorrichtung entsprechend jener aus Anspruch 1, insbesondere wie oben beschrieben.

Dabei wird mindestens eine Dosiereinheit zum dosierten Abgeben eines bestimmten Volumens der Masse zu einem Abgabeort bewegt, wobei die Bewegung eine Dreh- oder Schwenkbewegung ist.

Alternativ kann die Bewegung auch eine Überlagerung von einer translatorischen und einer Dreh- oder Schwenkbewegung sein oder eine Kombination aus einer translatorischen und einer Dreh- oder Schwenkbewegung sein.

Das Verfahren erlaubt eine sehr schnelle Positionierung der Dosiereinheit.

In einer vorteilhaften Ausführung der Erfindung wird die Masse über eine flexible Masseleitung aus einem insbesondere stationär angeordneten Massebehälter zu der mindestens einer Dosiereinheit geführt. Bevorzugt ist die flexible Masseleitung temperiert.

Alternativ kann zusammen mit der mindestens einer Dosiereinheit mindestens ein Massebehälter, insbesondere eine austauschbare und/oder nachfüllbare Massenkartusche zu dem Abgabeort bewegt werden.

Die Erfindung wird nachfolgend näher anhand von Ausführungsbeispielen erläutert.

Es zeigen
- Figur 1: eine schematische Schnittdarstellung eines ersten Beispiels für eine Dosiereinheit;
- Figur 2: eine schematische Schnittdarstellung eines Beispiels für eine Dosiereinheit mit Antrieb zur Veränderung des Dosierkammervolumens;
- Figur 3: eine schematische Schnittdarstellung eines Beispiels für eine Dosiereinheit mit flexibler Massezuleitung;
- Figur 4: eine schematische Schnittdarstellung eines Beispiels für eine Dosiereinheit mit Massekartusche;
- Figur 5: eine schematische Schnittdarstellung eines Beispiels für eine Dosiereinheit mit Verbindungselementen;
- Figur 6: eine schematische Perspektivdarstellung von einzelnen Dosiereinheiten im Verbund;
- Figur 7: eine schematische Schnittdarstellung zweier Dosiereinheiten im Verbund mit flexiblen Mundstücken;
- Figur 8: eine schematische Seitendarstellung eines ersten Beispiels für eine Antriebseinheit für eine Dosiereinheit;
- Figur 9a: eine schematische Seitendarstellung eines zweiten Beispiels für eine Antriebseinheit für eine Dosiereinheit;
- Figur 9b: eine schematische Draufsicht des zweiten Beispiels für eine Antriebseinheit für eine Dosiereinheit;
- Figur 10: eine schematische Perspektivansicht eines dritten Beispiels für eine Antriebseinheit für eine Dosiereinheit;
- Figur 11: eine schematische Perspektivansicht eines vierten Beispiels für eine Antriebseinheit für Dosiereinheiten;
- Figur 12: eine schematische Perspektivansicht eines fünften Beispiels für eine Antriebseinheit für Dosiereinheiten;
- Figur 13: eine schematische Perspektivansicht eines Massebehälters mit verstellbaren Trennwänden;
- Figur 14: eine schematische Perspektivansicht eines Einzelkartuschen und einer Mehrkartuschensystems.

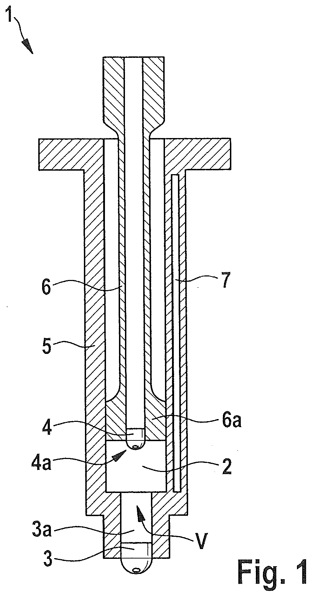

Figur 1 zeigt eine schematische Schnittdarstellung eines ersten Beispiels für eine Dosiereinheit 1.

Die Dosiereinheit 1 weist eine Dosierkammer 2 mit veränderbarem Kammer-Volumen (V) auf, welche eine verschliessbare Auslassöffnung 3a für die zu dosierende Masse sowie ein Druckerzeugungsmittel aufweist.

Die Dosiereinheit 1 weist einen in die Kammer 2 hineinragenden und innerhalb der Kammer beweglichen Verdrängungskörper 6a auf, der zwischen einer ersten Stellung, bei der die Auslassöffnung geschlossen und eine Einlassöffnung 4a offen ist und das zwischen dem Verdrängungskörper 6a und der Kammer 2 definierte Hohlraum-Volumen V seinen grössten Wert hat, und einer zweiten Stellung, bei der die Einlassöffnung 4a geschlossen und die Auslassöffnung 3a offen ist und das zwischen dem Verdrängungskörper 6a und der Kammer 2 definierte Hohlraum-Volumen V seinen kleinsten Wert hat, beweglich ist.

Die Auslassöffnung 3a ist über ein Auslassventil 3 verschliessbar und die Einlassöffnung 4a über ein Einlassventil 4.

Das Kammervolumen V ist durch eine Relativbewegung von zwei ineinander geführten Dosierrohren 5, 6 veränderbar. Das Auslassventil 3 ist am äusseren Dosierrohr 5 angeordnet, das Einlassventil 4 am inneren Dosierrohr 6.

Die Dosiereinheit 1 verfügt über eine Temperiervorrichtung 7, in diesem Fall über Kanäle für ein Kühlmittel. Alternativ kann eine elektrische Kühlung, z.B. ein Peltierelement vorgesehen sein.

Wird das innere Dosierrohr 6 aus dem äusseren Dosierrohr 5 herausgezogen, so öffnet das Einlassventil 4 und Masse kann in die Dosierkammer 2 strömen. Das Auslassventil 3 ist geschlossen.

Wird das innere Dosierrohr 6 in das äussere Dosierrohr 5 hineingeführt, so schliesst das Einlassventil 4 und die Ventilfläche drückt die Masse durch das Auslassventil 3 aus dem Kammervolumen 2 heraus, wobei das Auslassventil 3 unter dem Druck der Masse öffnet.

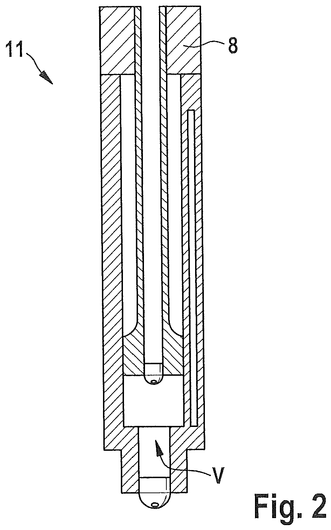

Figur 2 eine schematische Schnittdarstellung eines Beispiels für eine Dosiereinheit 11 mit einem Antrieb 8 zur Veränderung des Dosierkammervolumens V.

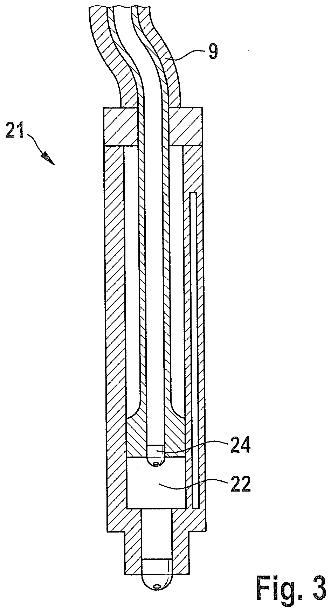

Figur 3 zeigt eine schematische Schnittdarstellung eines Beispiels für eine Dosiereinheit 21 mit flexibler Massezuleitung 8. Die Massezuleitung 8 kann temperierbar, zum Beispiel Kanäle aufweisen, die mit den Kühlkanälen 7 der Dosiereinheit verbunden sind.

Mit dem Dosierkammer-Einlassventil 24 ist eine Fluidverbindung zwischen einem nicht explizit dargestellten Massebehälter-Volumen und der Dosierkammer 22 herstellbar.

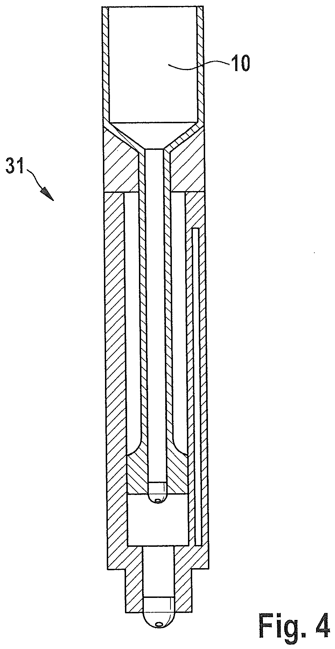

Figur 4 zeigt eine schematische Schnittdarstellung eines Beispiels für eine Dosiereinheit 31 mit Massekartusche 10. Die Massekartusche 10 kann ebenfalls temperierbar sein.

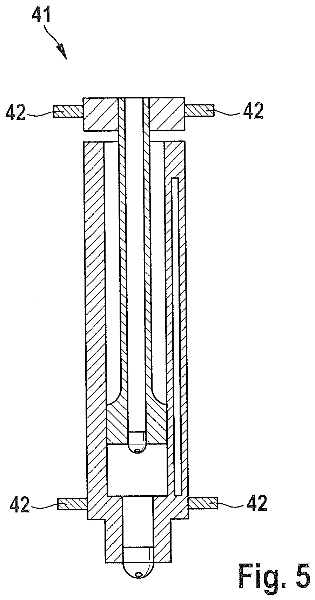

Figur 5 zeigt eine schematische Schnittdarstellung eines Beispiels für eine Dosiereinheit 41 mit Verbindungselementen 42.

Über die Verbindungselementen 42 können eine wählbare Anzahl von Dosiereinheiten 41 zusammengefasst werden. Die Dosierung kann über einen jeweiligen Antrieb erfolgen, oder die Dosierrohre werden gekoppelt und alle Dosiervolumina werden simultan verändert.

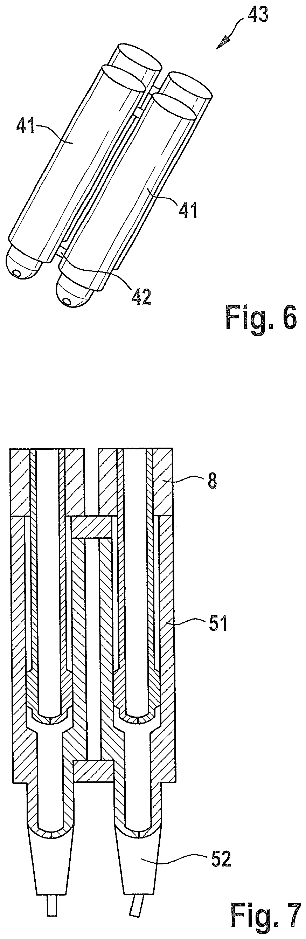

Figur 6 zeigt eine schematische Perspektivdarstellung von einzelnen Dosiereinheiten 41 im Verbund. Über Verbindeelemente 42 können weitere Dosiereinheiten 41 hinzugefügt werden, die als Dosierverbund 43 betrieben werden können.

Die Verbindeelemente 42 können mit Kühlkanälen versehen sein, sodass ein Dosierverbund 43 einen gemeinsamen Kühlkreislauf hat.

Figur 7 zeigt eine schematische Schnittdarstellung zweier Dosiereinheiten 51 im Verbund mit flexiblen Mundstücken 52. Die Mundstücke können über einen der Dosiereinheit 51 zugeordneten Antrieb 8 ausrichtbar sein.

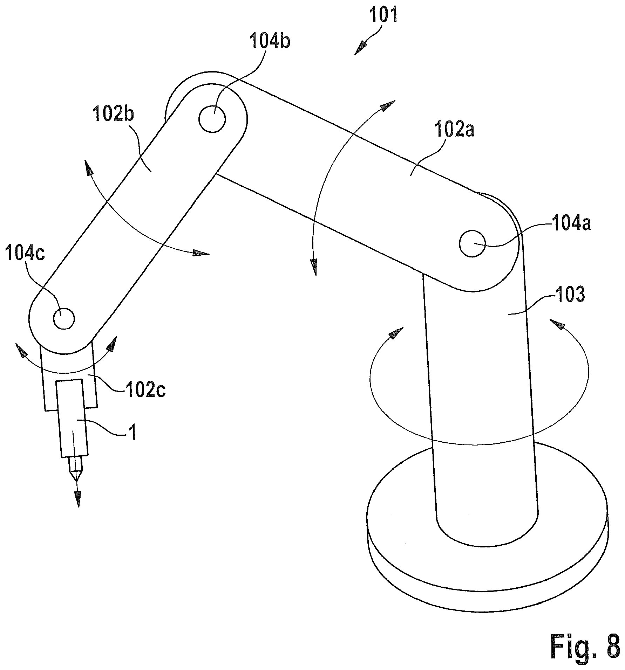

Figur 8 zeigt eine schematische Seitendarstellung eines ersten Beispiels für eine Antriebseinheit 101 für eine Dosiereinheit 1. Der Antrieb ist ein Roboterarm 101 mit drei Robotergliedern 102a, 102b, 102c und einer Robotersäule 103, die jeweils über Gelenkverbindungen 104a, 104b, 104c verbunden sind. Die Robotersäule 103 ist zusätzlich um die eigene Achse drehbar.

Die Dosiereinheit 1 kann mit dem Roboterarm 101 sehr schnell in eine ausgewählte Position gebracht werden, wobei gewährleistet ist, das die Ausrichtung der Dosiereinheit erhalten bleibt, so dass die Dosiereinheit sofort bereit zum Abgeben der Masse ist.

Anstelle einer Dosiereinheit 1 kann auch ein Dosierverbund vorgesehen sein.

Das periphere Roboterglied 102c kann mit einem Greifer ausgestattet sein, sodass der Roboterarm 101 die Dosiereinheit 1 oder den Dosierverbund aus einem Magazin entnehmen kann.

Mit dem Roboterarm 101 kann sehr schnell auf Anfrage eine bestimmte Dosiermasse an einem bestimmten Ort abgeben werden.

Die Ansteuerung des Roboterarms 101 erfolgt in bekannter Weise, wie es auch für andere Roboterarme üblich ist.

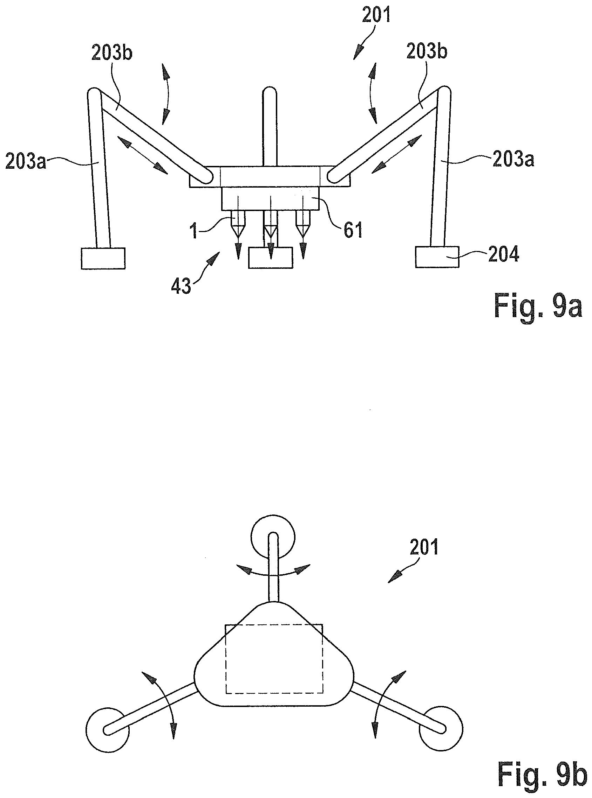

Figur 9a zeigt eine schematische Seitendarstellung eines zweiten Beispiels für eine Antriebseinheit 201 für einen Dosierverbund, der in einer Dosierplatte 61 angeordnet ist. Figur 9b zeigt eine schematische Draufsicht des zweiten Beispiels für eine Antriebseinheit für eine Dosiereinheit.

Der Antrieb 201 besteht aus drei Armen 202, die jeweils zwei gelenkig verbundene Glieder 203a, 203b aufweisen, von denen ein Glied 203a fest an einer Grundplatte 204 montiert ist und der andere 203b, der mit der Dosierplatte 61 verbunden ist, teleskopartig in der Länge veränderlich ist.

Ein derartiger Antrieb 201 ist insbesondere dann nützlich, wenn in einer bestimmten örtliche Umgebung schnell zwischen verschiedene Dosiermassen gewechselt werden soll. Die entsprechende Dosiereinheit 1 kann dann schnell als Teil des Dosierverbundes 43, der nur wenig verschoben werden muss, an den entsprechenden Ort gebracht werden. Die Masse wird entweder aus mitbewegten Massebehältern oder über flexible Schläuche aus stationären Massebehältern nachgefüllt.

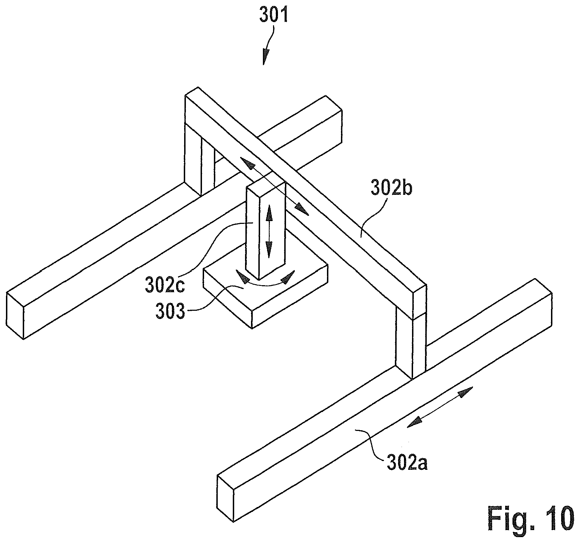

Figur 10 zeigt eine schematische Perspektivansicht eines dritten Beispiels für eine Antriebseinheit 301 für eine Dosiereinheit. Der Antrieb 301 ist eine kombinierte Linear-/Drehführung, mit Linearführungen 302a, 302b, 302c in x-, y- und z-Richtung sowie einer Aufnahme 303 für eine oder mehrere Dosiereinheiten, die drehbar ist.

Ein Dosierverbund kann mit diesem Antrieb schnell zur Freigabe anderen Dosiereinheiten oder zur Erzeugung eines anderen Giessmusters umpositioniert werden.

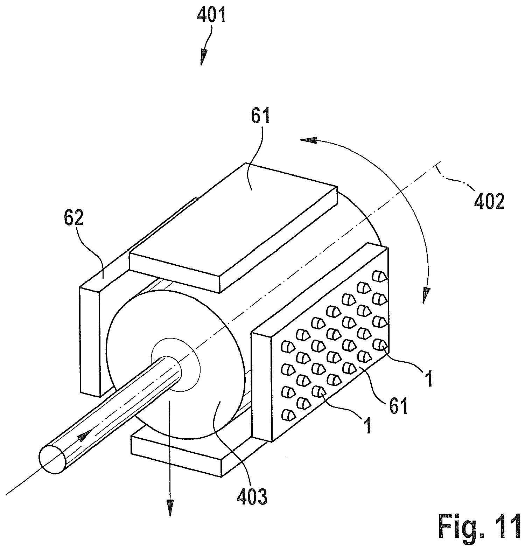

Figur 11 zeigt eine schematische Perspektivansicht eines vierten Beispiels für eine Antriebseinheit 401 für vier Dosierplatten 61. Die Dosierplatten 61 sind drehbar um eine Achse 402 auf einen Drehkopf 403 angeordnet. Dieser ist zusätzlich entlang der Achse 403 linear verschiebbar. Zusätzlich kann eine Verschiebung quer zur Achse 402 möglich sein.

Durch einen Wechsel der Dosierplatten 61 kann schnell die Anzahl der Dosiereinheiten 1 oder das Giessmuster geändert werden. Der Nachschub erfolgt durch den Drehkopf 403, der entweder einen oder mehrer Massenbehälter enthält, oder mit einem stationären Massebehälter verbunden ist.

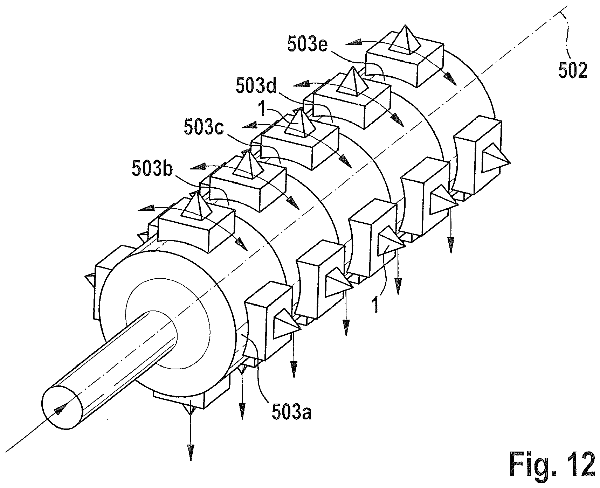

Figur 12 zeigt eine schematische Perspektivansicht eines fünften Beispiels für eine Antriebseinheit 501 für eine Dosiereinheit Auch hier sind Dosiereinheiten 1 um eine Achse 502 drehbar und entlang dieser Achse 502 linear verschiebbar. Zusätzlich kann eine Verschiebung quer zur Achse 502 möglich sein.

Die Dosiereinheiten 1 sind jedoch an Revolverelementen 503a, 503b, 503c, 503d, 503e angeordnet, die jeweils unabhängig voneinander um die Achse 502 drehbar sind.

Die Dosiereinheiten können mit unterschiedlichen Massen gefüllt sein, sodass schnell die einem Ort entsprechende Masse auswählbar ist. Es kann auch in einer einfachen Serie gegossen werden, wobei jeweils die leeren Dosiereinheiten 1 aus dem Giessbereich entfernt werden.

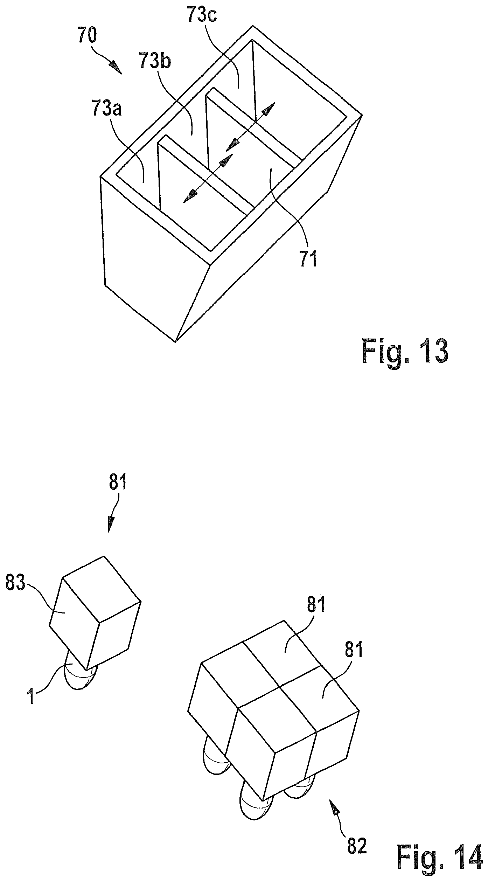

Figur 13 zeigt eine schematische Perspektivansicht eines Massebehälters 70 mit verstellbaren Trennwänden 71. Das gezeigte Beispiel weist drei Massekammern 73a, 73b, 73c auf, die jeweils andere Massen enthalten können und die sich drei Dosiereinheiten oder drei Dosierplatten zuordnen lassen.

Figur 14 zeigt eine schematische Perspektivansicht einer Einzelkartusche 81 und eines Mehrkartuschensystems 82, das aus Einzelkartuschen 81 besteht.

Eine Einzelkartusche 81 besteht in diesem Fall aus einer Dosiereinheit 1 und einem Massebehälter 83. Einzelkartuschen 81 lassen sich zu Mehrkartuschensystemen 82 mit einer beliebig wählbaren Anzahl von Einzelkartuschen 81 zusammenstellen.

Dies können einzeln zur Erreichung verschiedener Giessmuster angesteuert werden, sie können kollektiv oder beispielsweise reihenweise sukzessiv geleert werden.

Damit ergeben sich weitgehende Anwendungsgebiete, vor allem für individuell gestaltbare, kleinere Chargen von Verzehrgütern.

## Patentansprüche

1. Vorrichtung zur Verarbeitung eines Verzehrgutes in Form einer viskosen bis pastösen Masse, insbesondere eines Verzehrgutes auf Fettmasse-Basis wie Schokolade,
mit mindestens einer Dosiereinheit (1; 11; 21; 31; 41; 51) zum dosierten Abgeben eines bestimmten Volumens der Masse, wobei die mindestens eine Dosiereinheit (1; 11; 21; 31; 41; 51) mindestens eine Kammer (2) mit mindestens einer verschliessbaren Auslassöffnung (3a) für die zu dosierende Masse sowie ein Druckerzeugungsmittel aufweist, , **dadurch gekennzeichnet, dass** die Vorrichtung eine Antriebseinheit (101; 201; 301; 401; 501) umfasst, mittels derer die mindestens eine Dosiereinheit (1; 11; 21; 31; 41; 51) dreh- und/oder schwenkbar ist, insbesondere einen Roboterarm, einen Mehrarmroboter oder eine kombinierte Linear-/Drehführung,
und dass die mindestens eine Dosiereinheit (1; 11; 21; 31; 41; 51) über eine Temperiervorrichtung (7) verfügt, insbesondere über Kanäle für ein Kühlmittel oder ein elektrisches Kühlelement.

2. Vorrichtung gemäss Anspruch 1,
**dadurch gekennzeichnet, dass** die Dosiereinheit (1; 11; 21; 31; 41; 51) einen in die Kammer (2) hineinragenden und innerhalb der Kammer beweglichen Verdrängungskörper (6a) aufweist, der zwischen einer ersten Stellung, bei der die Auslassöffnung (3a) geschlossen und eine Einlassöffnung (4a) offen ist und das zwischen dem Verdrängungskörper (6a) und der Kammer (2) definierte Hohlraum-Volumen (V) seinen grössten Wert hat, und einer zweiten Stellung, bei der die Einlassöffnung (4a) geschlossen und die Auslassöffnung (3a) offen ist und das zwischen dem Verdrängungskörper (6a) und der Kammer (2) definierte Hohlraum-Volumen (V) seinen kleinsten Wert hat, beweglich ist,
wobei die mindestens eine Auslassöffnung (3a) über ein Auslassventil (3) verschliessbar ist und insbesondere eine Einlassöffnung (4a) über ein Einlassventil (4) verschliessbar ist.

3. Vorrichtung gemäss Anspruch 1 oder 2,
**dadurch gekennzeichnet, dass**
die mindestens eine Dosiereinheit (1; 11; 21; 31; 41; 51) zusätzlich translatorisch bewegbar ist.

4. Vorrichtung gemäss einem der vorhergehenden Ansprüche,
**dadurch gekennzeichnet, dass**
die mindestens eine Dosiereinheit eine Dosierkammer (2) mit veränderbarem Kammer-Volumen (V) und mit mindestens einem Dosierkammer-Auslassventil (3) sowie einem Dosierkammer-Einlassventil (4) ist, wobei mit dem Dosierkammer-Einlassventil (4) eine Fluidverbindung zwischen einem Massebehälter-Volumen und dem Dosierkammer-Volumen (2) herstellbar ist und das Kammervolumen (V) durch eine Relativbewegung von zwei ineinander geführten Dosierrohren (5, 6) veränderbar ist.

5. Vorrichtung gemäss einem der vorhergehenden Ansprüche,
**dadurch gekennzeichnet, dass**
die Dosiereinheit (1; 11; 21; 31; 41; 51) einen Antrieb (8) zur Veränderung des Kammervolumens (V) umfasst.

6. Vorrichtung gemäss einem der vorhergehenden Ansprüche,
**dadurch gekennzeichnet, dass**
die Dosiereinheit (1; 11; 21; 31; 41; 51) über eine flexible und insbesondere temperierbare Masseleitung (9) und/oder über eine Dosierschnecke mit einem, insbesondere stationär angeordneten, Massebehälter verbindbar ist.

7. Vorrichtung gemäss einem der vorhergehenden Ansprüche,
**dadurch gekennzeichnet, dass**
die Vorrichtung mindestens einen Massebehälter (10; 70; 83) aufweist, der zusammen mit der Dosiereinheit (1; 11; 21; 31; 41; 51) räumlich bewegbar ist, insbesondere eine austauschbare und/oder nachfüllbare Massenkartusche (10; 83).

8. Vorrichtung gemäss einem der vorhergehenden Ansprüche,
**dadurch gekennzeichnet, dass**
die Vorrichtung mit einer frei wählbaren Anzahl von Dosiereinheiten (1; 11; 21; 31; 41; 51) und insbesondere von Massebehältern (83), bestückbar ist.

9. Verfahren zum Verarbeiten eines Verzehrgutes in Form einer viskosen bis pastösen Masse (1), insbesondere eines Verzehrgutes auf Fettmasse-Basis wie Schokolade oder eines Verzehrgutes auf Wasser-Basis wie Eiskrem,
mit einer Vorrichtung, insbesondere gemäss einem der Ansprüche 1-7,
**dadurch kennzeichnet, dass** mindestens eine Dosiereinheit (1; 11; 21; 31; 41; 51) zum dosierten Abgeben eines bestimmten Volumens der Masse, zu einer Abgabe bewegt wird, wobei die Bewegung eine Dreh- oder Schwenkbewegung oder eine Überlagerung von oder Kombination aus einer translatorischen und einer Dreh- oder Schwenkbewegung ist, und die Dosiereinheit (1; 11; 21; 31; 41; 51) über eine Temperiervorrichtung (7) temperiert wird, insbesondere über Kanäle für ein Kühlmittel oder ein elektrisches Kühlelement, die mit der Dosiereinheit (1; 11; 21; 31; 41; 51) mitbewegt wird..

10. Verfahren gemäss Anspruch 9,
wobei
die Masse über eine flexible Masseleitung (9), die insbesondere temperiert wird, aus einem insbesondere stationär angeordneten Massebehälter zu der mindestens eine Dosiereinheit (1; 11; 21; 31; 41; 51) geführt wird.

11. Verfahren gemäss Anspruch 9 oder 10,
wobei zusammen mit der mindestens einen Dosiereinheit (1; 11; 21; 31; 41; 51) mindestens ein Massebehälter (10; 70; 83), insbesondere eine austauschbare und/oder nachfüllbare Massenkartusche (10; 83) zu einem Abgabeort bewegt wird.

## Claims

1. Device for processing a consumable item in the form of a viscous to pasty substance, in particular a consumable item based on a fatty substance, such as chocolate,
having at least one metering unit (1; 11; 21; 31; 41; 51) for the metered dispensing of a particular volume of the substance, wherein the at least one metering unit (1; 11; 21; 31; 41; 51) has at least one chamber (2) having at least one closable outlet opening (3a) for the substance to be metered and a pressure generating means,
**characterized in that** the device comprises a drive unit (101; 201; 301; 401; 501) by means of which the at least one metering unit (1; 11; 21; 31; 41; 51) is rotatable and/or pivotable, in particular a robot arm, a multi-arm robot or a combined linear/rotary guide,
and **in that** the at least one metering unit (1; 11; 21; 31; 41; 51) has a temperature-control device (7), in particular channels for a coolant or an electrical cooling element.

2. Device according to Claim 1,
**characterized in that** the metering unit (1; 11; 21; 31; 41; 51) has a displacement body (6a) that projects into the chamber (2) and is movable within the chamber, said displacement body (6a) being movable between a first position, in which the outlet opening (3a) is closed and an inlet opening (4a) is open and the cavity volume (V) defined between the displacement body (6a) and the chamber (2) has its greatest value, and a second position, in which the inlet opening (4a) is closed and the outlet opening (3a) is open and the cavity volume (V) defined between the displacement body (6a) and the chamber (2) has its smallest value,
wherein the at least one outlet opening (3a) is closable via an outlet valve (3) and in particular an inlet opening (4a) is closable via an inlet valve (4).

3. Device according to Claim 1 or 2,
**characterized in that**
the at least one metering unit (1; 11; 21; 31; 41; 51) is additionally movable in translation.

4. Device according to one of the preceding claims,
**characterized in that**
the at least one metering unit is a metering chamber (2) having a variable chamber volume (V) and having at least one metering-chamber outlet valve (3) and a metering-chamber inlet valve (4), wherein, by way of the metering-chamber inlet valve (4), a fluidic connecting is able to be established between a substance-container volume and the metering-chamber volume (2) and the chamber volume (V) is variable by a relative movement of two metering tubes (5, 6) guided one inside the other.

5. Device according to one of the preceding claims,
**characterized in that**
the metering unit (1; 11; 21; 31; 41; 51) comprises a drive (8) for varying the chamber volume (V).

6. Device according to one of the preceding claims,
**characterized in that**
the metering unit (1; 11; 21; 31; 41; 51) is connectable to a substance container, arranged in particular in a stationary manner, via a flexible and in particular temperature-controllable substance line (9) and/or via a metering screw.

7. Device according to one of the preceding claims,
**characterized in that**
the device has at least one substance container (10; 70; 83) which is spatially movable together with the metering unit (1; 11; 21; 31; 41; 51), in particular an exchangeable and/or refillable substance cartridge (10; 83).

8. Device according to one of the preceding claims,
**characterized in that**
the device is able to be equipped with a freely selectable number of metering units (1; 11; 21; 31; 41; 51) and in particular of substance containers (83).

9. Method for processing a consumable item in the form of a viscous to pasty substance (1), in particular a consumable item based on a fatty substance, such as chocolate, or a water-based consumable item such as ice cream,
having a device, in particular according to one of Claims 1 to 7,
**characterized in that**
at least one metering unit (1; 11; 21; 31; 41; 51) for the metered dispensing of a particular volume of the substance is moved to a dispensing point, wherein the movement is a rotary or pivoting movement or a superposition or combination of a movement in translation and a rotary or pivoting movement, and the metering unit (1; 11; 21; 31; 41; 51) is temperature-controlled via a temperature-control device (7), in particular via channels for a coolant or an electrical cooling element which is moved together with the metering unit (1; 11; 21; 31; 41; 51).

10. Method according to Claim 9,
wherein
the substance is passed from a substance container, arranged in particular in a stationary manner, to the at least one metering unit (1; 11; 21; 31; 41; 51) via a flexible substance line (9), which is in particular temperature-controlled.

11. Method according to Claim 9 or 10,
wherein, together with the at least one metering unit (1; 11; 21; 31; 41; 51), at least one substance container (10; 70; 83), in particular an exchangeable and/or refillable substance cartridge (10; 83), is moved to a dispensing location.

## Revendications

1. Dispositif de traitement d'un produit alimentaire se présentant sous la forme d'une matière visqueuse à pâteuse, notamment un produit alimentaire à base de graisse tel que le chocolat, le dispositif comprenant au moins une unité de dosage (1 ; 11 ; 21 ; 31 ; 41 ; 51) destinée à délivrer de façon dosée un certain volume de la matière, l'au moins une unité de dosage (1 ; 11 ; 21 ; 31 ; 41 ; 51) comportant au moins une chambre (2) pourvue d'au moins une ouverture de sortie (3a) pouvant être fermée et destinée à la matière à doser et un moyen de génération de pression, **caractérisé en ce que** le dispositif comprend une unité d'entraînement (101 ; 201 ; 301 ; 401 ; 501) au moyen de laquelle l'au moins une unité de dosage (1 ; 11 ; 21 ; 31 ; 41 ; 51) peut tourner et/ou pivoter, en particulier un bras de robot, un robot à bras multiples ou un guidage combiné linéaire/rotatif,
et **en ce que** l'au moins une unité de dosage (1 ; 11 ; 21 ; 31 ; 41 ; 51) dispose d'un dispositif de régulation de température (7), en particulier de conduits destinés à un agent de refroidissement ou un élément de refroidissement électrique.

2. Dispositif selon la revendication 1,
**caractérisé en ce que**
l'unité de dosage (1 ; 11 ; 21 ; 31 ; 41 ; 51) comporte un corps de déplacement (6a) qui fait saillie dans la chambre (2), est mobile à l'intérieur de la chambre et qui peut être déplacé entre une première position, dans laquelle l'ouverture de sortie (3a) est fermée et une ouverture d'entrée (4a) est ouverte et le volume de cavité (V) défini entre le corps de déplacement (6a) et la chambre (2) a sa valeur la plus grande, et une deuxième position dans laquelle l'ouverture d'entrée (4a) est fermée et l'ouverture de sortie (3a) est ouverte et le volume de cavité (V) défini entre le corps de déplacement (6a) et la chambre (2) a sa valeur la plus petite,
l'au moins une ouverture de sortie (3a) pouvant être fermée par le biais d'une soupape de sortie (3) et en particulier une ouverture d'entrée (4a) pouvant être fermée par le biais d'une soupape d'entrée (4).

3. Dispositif selon la revendication 1 ou 2,
**caractérisé en ce que**
l'au moins une unité de dosage (1 ; 11 ; 21 ; 31 ; 41 ; 51) est également mobile en translation.

4. Dispositif selon l'une des revendications précédentes, **caractérisé en ce que**
l'au moins une unité de dosage est une chambre de dosage (2) ayant un volume de chambre (V) variable et comportant au moins une soupape de sortie de chambre de dosage (3) et une soupape d'entrée de chambre de dosage (4), une liaison fluidique entre un volume de récipient de matière et le volume de chambre de dosage (2) pouvant être établie au moyen de la soupape d'entrée de chambre de dosage (4) et le volume de chambre (V) pouvant être modifié par un mouvement relatif de deux tubes de dosage (5, 6) guidés l'un dans l'autre.

5. Dispositif selon l'une des revendications précédentes,
**caractérisé en ce que**
l'unité de dosage (1 ; 11 ; 21 ; 31 ; 41 ; 51) comprend un entraînement (8) destiné à modifier le volume de chambre (V).

6. Dispositif selon l'une des revendications précédentes,
**caractérisé en ce que**
l'unité de dosage (1 ; 11 ; 21 ; 31 ; 41 ; 51) peut être reliée à un récipient de matière, disposé en particulier de manière fixe, par le biais d'un conduit de matière (9) flexible et en particulier pouvant être régulé en température et/ou par le biais d'une vis de dosage.

7. Dispositif selon l'une des revendications précédentes,
**caractérisé, en ce que**
le dispositif comprend au moins un récipient de matière (10 ; 70; 83) qui est mobile dans l'espace conjointement avec l'unité de dosage (1 ; 11 ; 21 ; 31 ; 41 ; 51), en particulier une cartouche de matière remplaçable et/ou rechargeable (10 ; 83).

8. Dispositif selon l'une des revendications précédentes,
**caractérisé, en ce que**
le dispositif peut être équipé d'un nombre librement sélectionnable d'unités de- dosage (1 ; 11 ; 21 ; 31 ; 41 ; 51) et en particulier de récipients de matière (83) .

9. Procédé de traitement d'un produit alimentaire se présentant sous la forme d'une matière visqueuse à pâteuse (1), en particulier d'un produit alimentaire à base de matière grasse telle que du chocolat ou d'un produit alimentaire à base d'eau tel que de la crème glacée, comprenant un dispositif, en particulier selon l'une des revendications 1 à 7,
**caractérisé en ce que**
au moins une unité de dosage (1 ; 11 ; 21 ; 31 ; 41 ; 51) est déplacée vers un site de délivrance pour délivrer de façon dosée un volume déterminé de la matière, le mouvement étant un mouvement de rotation ou de pivotement ou une superposition ou une combinaison d'un mouvement de translation et d'un mouvement de rotation ou de pivotement, et l'unité de dosage (1 ; 11 ; 21 ; 31 ; 41 ; 51) étant régulée en température par le biais d'un dispositif de régulation de température (7), déplacé conjointement avec l'unité de dosage (1 ; 11 ; 21 ; 31 ; 41 ; 51), en particulier par le biais de conduits destinés à un fluide de refroidissement ou un élément de refroidissement électrique.

10. Procédé selon la revendication 9,
la matière est guidée, par le biais d'un conduit de matière (9) flexible, en particulier régulé en température, depuis un récipient de matière disposé en particulier de manière fixe à l'au moins une unité de dosage (1 ; 11 ; 21 ; 31 ; 41 ; 51).

11. Procédé selon la revendication 9 ou 10,
au moins un récipient de matière (10 ; 70 ; 83), en particulier une cartouche de matière remplaçable et/ou rechargeable (10 ; 83), est déplacé en même temps que l'au moins une unité de dosage (1 ; 11 ; 21 ; 31 ; 41 ; 51) vers un site de délivrance.
